Europäisches Patentamt

European Patent Office

Office européen des brevets

(19)

(11) **EP 0 560 172 B1**

(12) **EUROPÄISCHE PATENTSCHRIFT**

(45) Veröffentlichungstag und Bekanntmachung des Hinweises auf die Patenterteilung:
**20.08.1997 Patentblatt 1997/34**

(51) Int Cl.6: **C21D 9/52**, C21D 1/70

(21) Anmeldenummer: **93103260.1**

(22) Anmeldetag: **02.03.1993**

(54) **Verfahren zum Vermeiden von Klebern beim Glühen von Stahlband**

Process for avoiding adherence of steelbelt during annealing

Procédé pour éviter le collage de bande d'acier pendant le recuit

(84) Benannte Vertragsstaaten:
**AT BE DE DK ES FR GB IT LU NL SE**

(30) Priorität: **09.03.1992 DE 4207394**

(43) Veröffentlichungstag der Anmeldung:
**15.09.1993 Patentblatt 1993/37**

(73) Patentinhaber: **MESSER GRIESHEIM GMBH**
**D-60547 Frankfurt (DE)**

(72) Erfinder: **Zylla, Peter**
**W-4150 Krefeld (DE)**

(56) Entgegenhaltungen:
**DE-C- 56 773**          **FR-A- 666 903**
**US-A- 1 815 505**       **US-A- 2 165 635**

## Beschreibung

Die Erfindung betrifft ein Verfahren zum Vermeiden von Klebern beim Glühen von Stahlband mit niedrigem Kohlenstoffgehalt nach dem Oberbegriff des Anspruches 1.

Stahlband wird in Form von Festbunden in Topf-, Hauben- oder Rollendurchlauföfen geglüht. Als Schutzgas wird gewöhnlich ein $N_2$-$H_2$-Gasgemisch oder Exogas verwendet. Beim Glühen dieser Stahlbänder treten oft Kleber auf.

Diese Bandkleber werden durch viele Faktoren beeinflußt. Die wesentlichen sind: die Geometrie und Größe der Oberflächenrauheit, die Schutzgasart, der Kontaktdruck, die Temperatur und die Zeit.

Kleber entstehen, wie man in der Literatur vermutet, an der Stelle der Stahloberfläche, an der erhöhter Druck und eine Relativbewegung der Windungen während der Abkühlung auftritt. Dadurch kommt es zu Adhäsions- und Diffusionsvorgängen.

Der Erfindung liegt die Aufgabe zugrunde, ein Verfahren zur Vermeidung der Kleber beim Glühen von Stahlband mit niedrigen Kohlenstoffgehalt zu schaffen.

Aus US-A-2 165 635 ist ein Verfahren zum Vermeiden von Klebern beim Glühen von Stahlband durch oxidation des Stahlbandes durch Aufsprühen von Wasser bekannt.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Eine vorteilhafte Weiterbildung der Erfindung ist in dem Unteranspruch 2 angegeben.

Das Glühen (Halten) der Stahlbänder wird bei Temperaturen von 650°C bis 720°C durchgeführt.

Die durch das erfindungsgemäße Verfahren gebildete Deckschicht dient als Schutz gegen das Zusammenkleben der einzelnen Windungen beim Beginn der Abkühlphase, d.h. bis 600°C im Kern. Da die Spannungen im Bundinneren zwischen den einzelnen Windungen dann am größten sind, wurde diese Grenztemperatur als "kritisch" bezeichnet.

Nach Unterschreiten dieser Temperatur müssen erneut reduzierende Bedingungen im Ofen geschaffen werden, um die ausgebildete Oxiddeckschicht im weiteren Verlauf der Glühung vollständig zu reduzieren.

Dies erreicht man durch Änderung des Wassergasgleichgewichtes (Haube unter Druck) oder einen Austausch der Ofenatmosphäre gegen z.B. $N_2/H_2$.

Die Erfindung wird nachfolgend durch ein Ausführungsbeispiel und theoretische Überlegungen anhand der Zeichnungen erläutert.

Es zeigen:

Fig.1    das Dreistoffsystem C-H-O zur Bestimmung der atomaren Schutzgaszusammensetzung bei 680°C,

Fig.2a,b    ein Beispiel für den Ablauf der Glühphasen beim Glühen (680°C) des Bandstahls unter Aufteilung des $N_2$-$H_2$-$CO_2$-Schutzgases in zwei theoretische Gasgemische.

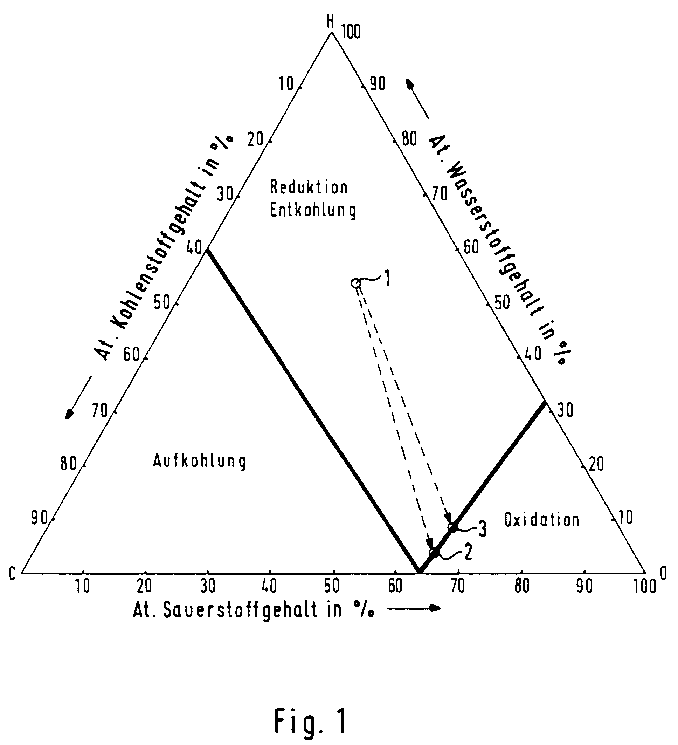

In Fig.1 bezeichnet Punkt 1 ein $N_2$-$H_2$-Gasgemisch, Punkt 2 Exogas und Punkt 3 das $N_2$-$H_2$-Gasgemisch mit $CO_2$-Zugabe.

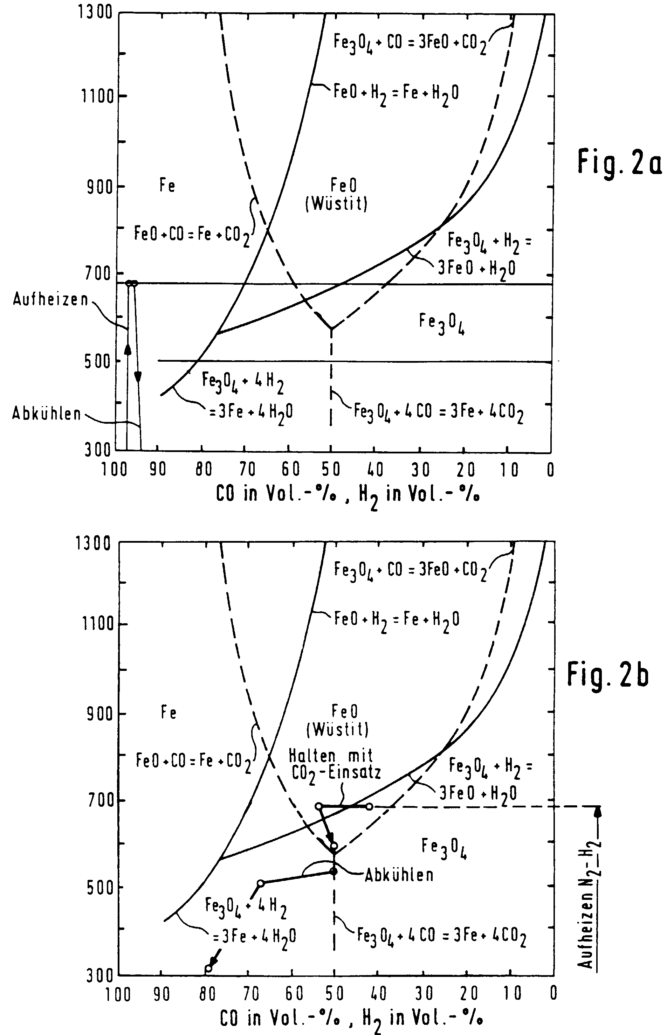

Fig.2a betrifft das theoretische Gasgemisch $H_2$-$H_2O$, zuständig für die Reduktion. Fig.2b betrifft das theoretische Gasgemisch CO-$CO_2$, zuständig für die Oxidation (Haltezeit bis ca. 600°C)/Reduktion (T < 600°C).

In Gasgemischen aus Kohlenmonoxid (CO), Kohlendioxid ($CO_2$), Wasserstoff ($H_2$) bzw. Methan ($CH_4$) erfolgt so lange eine Reaktion zwischen Komponenten, bis eine einheitliche Kohlenstoffaktivität erreicht ist.

Besteht zwischen der Metalloberfläche und der Gasphase kein Gleichgewicht so kommt es über Aufkohlungs- und Entkohlungs- bzw. über Oxidations-/Reduktionsreaktionen so lange zu einem Stoffaustausch zwischen beiden Phasen, bis der Gleichgewichtszustand erreicht ist.

Jeder also, sich aus der gewünschten chemischen Zusammensetzung der Stahloberfläche ergebenden Kohlenstoffaktivität ist im Gleichgewichtszustand bei definierter Temperatur eine bestimmte Gaszusammensetzung zugeordnet.

$$[C] + [CO_2] \rightarrow 2\ [CO]$$

$$[C] + [H_2O] \rightarrow [CO] + \{H_2\}$$

Da die Kohlenstoffaktivität für niedriglegierten Stahl niedrig sein muß und in diesem Fall die Oxidations-/Reaktionen wichtig sind, wurde die Gaszusammensetzung der homogenen Wassergasreaktion zugeordnet, die eine Zusammenfassung der folgenden Reaktionen ist:

2

$$CO_2 = CO + \frac{1}{2} O_2$$
$$\frac{1}{2} O_2 + H_2 = H_2O$$
$$\overline{\{CO_2\} + \{H_2\} = \{CO\} + \{H_2O\}}$$

Bei definierter Temperatur wird über den entsprechenden Gleichgewichtszustand eine bestimmte Gaszusammensetzung erreicht.

Es wurde z.B. ein $N_2$-$H_2$ (97%/3,0%)-Gasgemisch gewählt. Mit einer bestimmten Menge von $CO_2$-Zusatz und der gesamten Schutzgasmenge wird Ablauf der Wassergasreaktion bei bestimmten Temperaturen gesteuert. Im homogenen Zustand laufen unter der Haube folgende Reaktionen ab:

$$H_2O = H_2 + \frac{1}{2} O$$

$$CO_2 = CO + \frac{1}{2} O_2$$

$$CO_2 + H_2 = H_2O + CO$$

Die Sauerstoffübertragung verursacht weitere:

$$Me + \frac{1}{2} O_2 = MeO$$

$$Me + CO_2 = MeO\, CO$$

Da die Reaktion $CO_2 => CO + \frac{1}{2} O_2$ relativ langsamer im Vergleich zu $H_2O = H_2 + \frac{1}{2} O_2$ ist, muß auch mit längeren Zeiten der Oxidation im CO-$CO_2$-Gasgemisch gerechnet werden.

Beispiel:

Für die homogene Wassergasreaktion gilt im allgemeinen:

$$Lg\, K_W = Lg\, (P_{CO} \cdot P_{H_2O}/P_{CO} \cdot P_{H_2}) = 1717/T + 1.575$$

Bei z.B. 680°C $K_W = 0.6$

Wird nun beispielsweise ein Gasgemisch aus 1,2% $CO_2$ und 3,0% $H_2$ und 0,004% $H_2O$ auf 680°C erhitzt, so stellt sich die Frage nach der Gaszusammensetzung, nachdem sich das Gleichgewicht eingependelt hat. Die Reaktionsgleichung in einem homogenen System folgt der Beziehung:

$$V_A A + V_B B + \ldots\ldots + \Delta H = V_E E + V_F F + \ldots\ldots,$$

wo Vi, i = [A,....F] stöchiometrischen Molzahlen der Stoffe i bedeuten.
Bei Verwendung der Molenbrüche Xi = Pi/P
nimmt das Massenwirkungsgesetz die Gestalt:

$$E^{VE} \cdot F^{VF}/A^{VA} \cdot B^{VB} = K_P \cdot {}_P exp^{-\Delta\Sigma Vi}$$

Der Reaktionsindex $\Delta\Sigma$ Vi, Summe der Molzahlen der Ausgangsprodukte abzüglich der Summe der Molzahlen

der Endprodukte lautet:

$$\Delta \Sigma Vi = V_E + V_F - V_A - V_B$$

und gibt über die Volumenänderung und Druckabhängigkeit Auskunft.

Im vorgenannten Beispiel der Wassergasreaktion ergibt sich $\Delta\Sigma Vi = 0$, wobei allgemein gilt:

$$K_P P \cdot P_{exp} -\Delta\Sigma VI = K_C (RT/P)exp\Delta\Sigma Vi$$

Da $\Delta\Sigma Vi = 0$ folgt $K_P = K_C$. Daher ist die Reaktion druckunabhängig.

Setzt man für die ursprüngliche Gaszusammensetzung:

$$X_{CO} = 0 ; X_{H_2} = 0.03 ; X_{CO_2} = 0.012; X_{H_2O} = 0.00004$$

und den Molenbruch des neugebildeten CO: = Z, so ergibt sich für die Gleichgewichtszusammensetzung des Molenbruches:

$$CO: = Z$$

$$CO_2 : = XCO_2 -Z$$

$$H_2 : = X_{H_2} -Z$$

$$H_2O : = X_{H_2O} +Z$$

Das Massenwirkungsgesetz lautet dann:

$$K = Z (X_{H_2O} +Z) / (X_{CO_2} -Z) (X_{H_2} -Z)$$

Nach Z aufgelöst, entsteht das Polynom:

$$(1-K)Z^2 + (X_{H_2O} + KX_{CO_2} + KX_{H_2})Z - KX_{CO_2}X_{H_2} = 0$$

wird für K (680°C) der Wert von 0.6 eingesetzt so ergibt sich eine Analyse des Idealzustandes von:
$H_2 = 2,24\%$, $CO = 0,76\%$, $CO_2 = 0,44\%$
$H_2O = 0,77\%$

Bei K = 0,01 z.B. wäre es:
$H_2 = 2,83\%$, $CO = 0,17\%$, $CO_2 = 1,03\%$
$H_2O = 0,17\%$

Die Zusammensetzung des Gasgemisches kann also theoretisch in folgenden Bereichen variieren:

$$H_2 = 2.24 \div 2.83\%$$

$$CO = 0.17 \div 0.76\%$$

$$CO_2 = 0.44 \div 1.03\%$$

$$H_2O = 0.17 \div 0.77\%$$

In diesem Fall wurde während eines Versuches gemessen: $H_2 = 2.1\%$; $CO = 0.78\%$; $CO_2 = 0.86\%$; $H_2O = 0.06\%$ Diese Gaszusammensetzung entspricht einem bestimmten Punkt 3 im Dreistoffsystem C - H - O (Fig.1). Die Lage des Punktes im Dreistoffsystem bestimmt den Einfluß der Gaszusammensetzung auf die Oberfläche des Bandstahls.

Die Zugabe von $CO_2$ zu einem $N_2$-$H_2$-Gasgemisch verschiebt also den entsprechenden Punkt 1 der Gaszusammensetzung im Dreistoffsystem von einem Reduktionsbereich zu einem Grenzbereich der Oxidation hin. Je nach Fahrweise des Ofens ändert sich die Gaszusammensetzung so, daß das Wassergasgleichgewicht zwischen 0.01 und 0.6 variieren kann.

In diesem Sinn wurde eine optimale Konzentration des $CO_2$-Einsatzes gefunden, um Eigenschaften der Wassergasreaktion für den Zweck einer kleberfreien Glühung vollständig auszunutzen.

Dies erreicht man mit einem $CO_2$-Einsatz von z.B. $0.9 \div 2.5\%$ im 97/3 $N_2$-$H_2$-Gasgemisch, also mit relativ niedrigen $CO_2$-Gehalten im Vergleich zu Exogas.

Weitere theoretische Überlegungen haben gezeigt, daß an der Oberfläche des Bandstahls eine Oxidschicht bzw. $CO_2$-Stauschicht als Schutzschicht im Molekülbereich gebildet werden kann, die das Kleben der Windungen vermeidet. Um dies zu erreichen, muß während bzw. am Ende der Haltezeit beim Glühen im Ofen eine leicht oxidierende Atmosphäre gebildet werden, die an der Oberfläche des Bandstahls eine dünne inaktive Deckschicht (FeO) verursacht.

Fig.2 stellt die Änderungen der $N_2$-$H_2$-$CO_2$ Schutzgasatmosphäre in allen Glühphasen dar. Diese wurden hier theoretisch in:

a. $H_2$-$H_2O$ - Gasgemisch
b. $CO$-$CO_2$ - Gasgemisch

aufgeteilt.

Über die homogene Wassergasreaktion oder über beide Teilreaktionen, wie eben beschrieben, bildet sich CO und $H_2O$ in solchen Mengen, daß das $CO$-$CO_2$-Gasgemisch für die Oxidation oberhalb 600°C zuständig ist.

Das $H_2H_2O$-Gasgemisch wirkt dagegen reduzierend. Mit sinkender Temperatur (Abkühlphase) ändert sich das $CO$-$CO_2$-Verhältnis des anstehenden Schutzgases so, daß eine vollständige Reduzierungskraft beider Gasgemische erst unterhalb 600°C genutzt wird.

Die ausgebildete Oxiddeckschicht wird zum Ende der Abkühlphase reduziert.

Der optimale $CO_2$-Einsatz wurde der gesamten Glühgutoberfläche zugeordnet und beträgt $0.2 \div 0.3$ g $CO_2$ pro $m^2$ der Bandstahloberfläche.

Das erfindungsgemäße Verfahren gibt die Möglichkeit, die Kleberbildung zu vermeiden bzw. drastisch zu reduzieren und die Exogaserzeugung mit syntetischen Gasen zu ersetzen. Im Vergleich zum Exogas mit ca. 8% CO und 6% $CO_2$, darf es als umweltfreundliches Verfahren bezeichnet werden, da die CO-Emission um ca. 95% und die $CO_2$-Emission um ca. 92% verringert wird.

**Patentansprüche**

1. Verfahren zum Vermeiden von Klebern beim Glühen von Stahlband mit niedrigem Kohlenstoffgehalt unter einem Schutzgas aus 95% bis 99% Stickstoff, Rest Wasserstoff, mit den Phasen Aufheizen, Halten und Abkühlen durch die Bildung einer oxidischen Deckschicht auf dem Stahlband,

   dadurch gekennzeichnet,

   daß während der Haltezeit das Stahlband durch Oxidation bei Temperaturen oberhalb 600°C mit einer dünnen Deckschicht belegt wird, indem 0,2 bis 0,3 g $CO_2$ pro $m^2$ der Glühgutoberfläche dem Schutzgas hinzugefügt werden, wonach während der Abkühlphase bei Temperaturen unterhalb 600°C die Deckschicht durch Reduzieren wieder vollständig entfernt wird.

2. Verfahren nach Anspruch 1,
   dadurch gekennzeichnet,
   daß die Reduktion durch Änderung des Wassergasgleichgewichtes erfolgt.

**Claims**

1. Process for avoiding the formation of bonds during the annealing of steel strip having a low carbon content under a protective gas comprising 95% to 99% nitrogen, with the remainder being hydrogen, and having the phases of heating, holding and cooling, by the formation of an oxide covering layer on the steel strip, characterized in that, during the holding time, the steel strip is coated with a thin covering layer by oxidation at temperatures above 600°C, by adding to the protective gas 0.2 to 0.3 g of $CO_2$ per $m^2$ of the surface of the material to be annealed, after which the covering layer is completely removed again by reduction during the cooling phase at temperatures below 600°C.

2. Process according to Claim 1, characterized in that the reduction is carried out by changing the water gas equilibrium.

## Revendications

1. Procédé pour éviter le collage de bande d'acier à faible teneur en carbone pendant le recuit sous atmosphère de protection composée de 95 % à 99 % d'azote et pour le reste d'hydrogène, consistant des phases réchauffement, maintien et refroidissement, au moyen de la formation d'une couche de recouvrement oxydique sur la bande d'acier, caractérisé en ce que
pendant la phase de maintien, la bande d'acier est couverte d'une fine couche de recouvrement au moyen d'une oxydation à des températures supérieures à 600°C à l'aide de l'addition de 0,2 à 0,3 g de $CO_2$ par $m^2$ de surface de matériau recuit à l'atmosphère de protection, où ensuite la couche de recouvrement est complètement éliminée par réduction pendant la phase de refroidissement à des températures inférieures à 600°C.

2. Procédé selon la revendication 1,
caractérisé en ce que
la réduction a lieu au moyen de la modification de l'équilibre du gaz à l'eau.

Fig. 1

EP 0 560 172 B1

Fig. 2a

Fig. 2b